# EUROPEAN PATENT APPLICATION

(11) **EP 4 794 166 A1**
(43) Date of publication of application: **19.08.2026**
(21) Application number: 25855415.3
(22) Date of filing: 01.07.2025
(51) Int. Cl.: H02J 7/00, H01M 10/44

(54) **BATTERY MANAGEMENT SYSTEM**

(30) Priority: 05.12.2024 KR 20240179151
(71) Applicant: LG ENERGY SOLUTION, LTD., Seoul 07335 (KR)
(72) Inventor: KIM, Youngbeom, Daejeon 34122 (KR)
(74) Representative: BCKIP Part mbB
(86) International application number: PCT/KR2025/009275
(87) International publication number: WO 2026/121439

(57) **Abstract**

A system for managing battery performs bidirectional charge/discharge active cell balancing of a plurality of battery cells using a single converter, thereby reducing the number of components required for active cell balancing and achieving cost and size reduction of the system for managing battery.

## Description

### [Technical Field]

The present disclosure relates to a system for managing battery.

### [Background Art]

As battery development progresses and battery capacity gradually increases, the tolerance of the state of charge (SoC) capacity of battery cells within a single battery pack containing multiple battery cells is also increasing. In order to ensure the safety of battery pack use, the states of charge (SoC) of battery cells need to be made the same through cell balancing.

However, conventional cell balancing is a passive cell balancing method that simply consumes the voltage of a battery cell having a high state of charge (SoC) through heat loss using a resistor element. This passive method has a balancing current of up to mA, which is a very small amount compared to the battery cell capacity. This has the limitation that the cell balancing operation time must be very long.

In order to perform balancing within a shorter time than this passive method, active cell balancing needs to be applied to increase the balancing current in Ampere. Conventional active cell balancing solutions require one DC-DC converter (external inductor or external transformer) per battery cell, which significantly increases the cost of a battery management system (BMS) and also significantly increases the size of a BMS board.

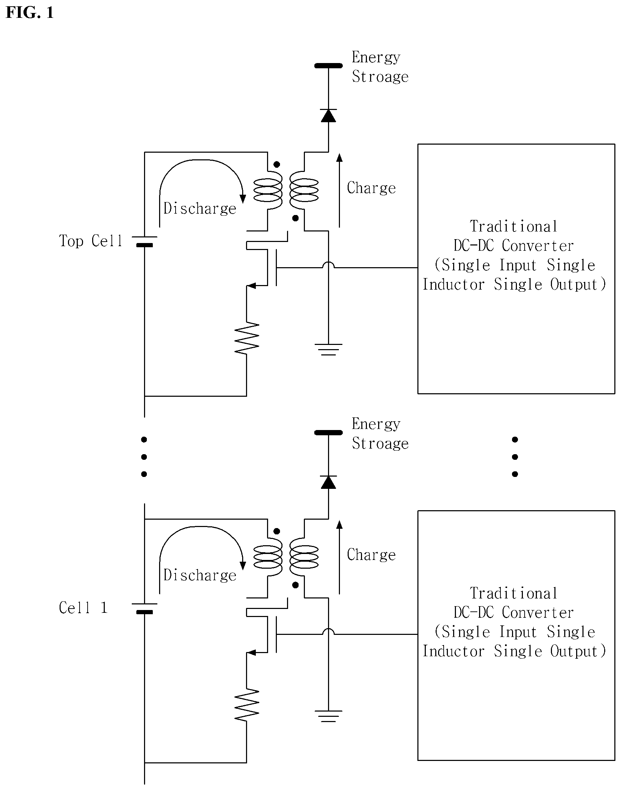

FIG. 1 is a diagram illustrating a battery management system that performs conventional active cell balancing.

That is, as shown in FIG. 1, the conventional active cell balancing technology requires one DC-DC converter per battery cell. This DC-DC converter requires one inductor element (or one transformer). This means that a considerable number of elements are required. For example, if there are 20 battery cells in one battery pack, 20 DC-DC converters and 20 inductors (or transformers) are required inside the battery management system (BMS).

### [Disclosure]

### [Technical Problem]

According to an embodiment of the present disclosure, a system for managing battery that performs bidirectional charge/discharge active cell balancing of a plurality of battery cells using a single converter can be provided.

The aspects to be achieved in the present disclosure are not limited to the aspect mentioned above, and can be expanded in various manners within a scope that does not deviate from the spirit and scope of the present disclosure.

### [Technical Solution]

A system for managing battery according to an embodiment of the present disclosure includes a battery pack including a plurality of battery cells, and a battery management device including a single converter and configured to perform bidirectional charge/discharge active cell balancing of the plurality of battery cells using the single converter.

The battery management device may control the single converter such that the single converter operates in one of a first operation mode in which a plurality of battery cell voltages is input and one battery pack voltage is output, and a second operation mode in which the one battery pack voltage is input and the plurality of battery cell voltages is output.

The battery management device may perform an active cell balancing discharge operation in which voltages of at least two of the plurality of battery cells are input to the single converter and the battery pack is charged using one battery pack voltage output from the single converter when the single converter operates in the first operation mode.

The battery management device may perform an active cell balancing charge operation in which the battery pack voltage of the battery pack is input to the single converter and the plurality of battery cells is charged using the battery cell voltages of the plurality of battery cells output from the single converter when the single converter operates in the second operation mode.

The single converter may include two first switches connected to each of the plurality of battery cells.

The single converter may further include a second switch connected to the battery pack.

The single converter may further include an inductor having one end connected to the first switches connected to each of the plurality of battery cells and the other end connected to the second switch connected to the battery pack.

The single converter may further include a transformer having one end connected to the first switches connected to each of the plurality of battery cells and the other end connected to the second switch connected to the battery pack.

The battery management device may control on/off of the first switches and the second switch such that the single converter operates in one of the first operation mode and the second operation mode to perform bidirectional charge/discharge active cell balancing.

The battery management device may control the first switches to be turned on first and then controls the second switch to be turned on such that the single converter operates in the first operation mode to perform an active cell balancing discharge operation.

The battery management device may control the second switch to be turned on first and then controls the first switches to be turned on such that the single converter operates in the second operation mode to perform an active cell balancing charge operation.

The battery management device may include N converters and perform bidirectional charge/discharge active cell balancing of the plurality of battery cells using the N converters, N being smaller than the number of battery cells, M.

The N converters may perform bidirectional charge/discharge active cell balancing for different battery cells among the plurality of battery cells.

### [Advantageous Effects]

According to an embodiment of the present disclosure, it is possible to reduce the number of components required for active cell balancing by performing bidirectional charge/discharge active cell balancing of a plurality of battery cells using a single converter, thereby achieving cost reduction and size reduction of a system for managing battery.

The effects according to the various embodiments of the present disclosure are not limited to the effects described above, and it is obvious to a person skilled in the art that various effects are inherent in the present disclosure.

### [Description of Drawings]

FIG. 1 is a diagram illustrating a battery management system performing conventional active cell balancing.
FIG. 2 is a block diagram illustrating a system for managing battery according to an embodiment of the present disclosure.
FIG. 3 is a block diagram illustrating a configuration of a single converter shown in FIG. 2.
FIG. 4 is a diagram illustrating an example of a system for managing battery according to an embodiment of the present disclosure.
FIG. 5 is a diagram illustrating an active cell balancing discharge operation of the system for managing battery shown in FIG. 4.
FIG. 6 is a diagram illustrating an active cell balancing charge operation of the system for managing battery shown in FIG. 4.
FIG. 7 is a diagram illustrating another example of a system for managing battery according to an embodiment of the present disclosure.

### [Mode for Disclosure]

Hereinafter, embodiments of the present disclosure will be described in detail with reference to the attached drawings. The advantages and features of the embodiments of the present disclosure, and methods for achieving the same will become clear with reference to the contents described in detail below together with the attached drawings. However, the embodiments of the present disclosure are not limited to the embodiments described below, but may be implemented in various different forms, and the embodiments of the present disclosure are defined only by the scope of the claims.

Like reference numerals refer to like elements throughout the specification. Unless otherwise defined, all terms (including technical and scientific terms) used in the specification may be used in meanings that can be commonly understood by a person having ordinary knowledge in the technical field to which the embodiments of the present disclosure belong. In addition, terms defined in a commonly used dictionary shall not be ideally or excessively interpreted unless explicitly specifically defined.

In the present disclosure, the terms "first", "second", etc. are used to distinguish a particular component from other components, and the components described above are not limited by these terms. For example, the "first" component may be used to refer to an element of the same or similar form as the "second" component.

In this specification, identification symbols (e.g., a, b, c, etc.) for each step are used for convenience of explanation, and the identification symbols do not describe the order of steps, and the steps may occur in a different order than the stated order unless the context clearly indicates a specific order. That is, the steps may occur in the same order as the stated order, may be performed substantially simultaneously, or may be performed in the opposite order.

In the present disclosure, the terms "comprise", "comprising", and the like may indicate the presence of features (for example, numerical values, functions, operations, or components such as parts), but such terms do not exclude additional features.

Further, the term "~ part" described in this specification means a software or hardware component such as a field-programmable gate array (FPGA) or an ASIC, and the "~ part" performs certain roles. However, the "~ part" is not limited to software or hardware. The "~ part" may be configured to be in an addressable storage medium and may be configured to operate one or more processors. Accordingly, as an example, the "~ part" includes components such as software components, object-oriented software components, class components, and task components, processes, functions, properties, procedures, subroutines, segments of program code, drivers, firmware, microcode, circuits, data structures, and variables. Functions provided in the components and "~ parts" may be combined into a smaller number of components and "~ parts" or further separated into additional components and "~ parts".

Hereinafter, a system for managing battery according to an embodiment of the present disclosure will be described in detail with reference to the attached drawings.

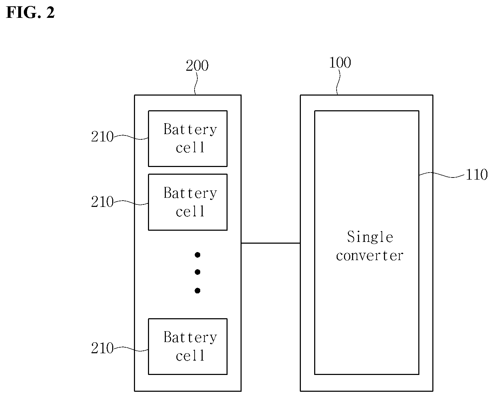

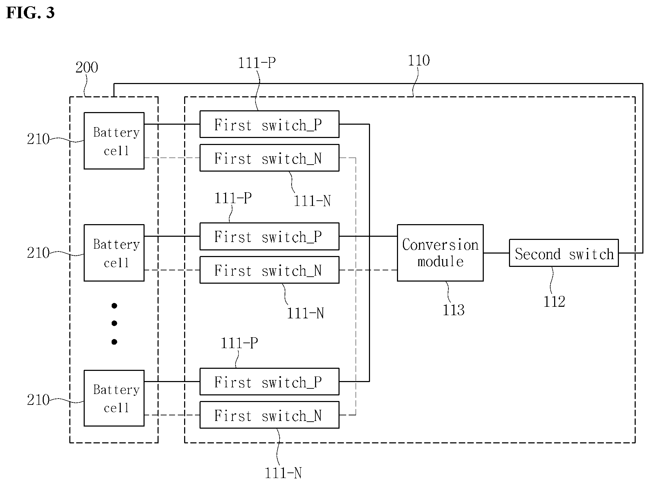

First, a system for managing battery according to an embodiment of the present disclosure will be described with reference to FIG. 2 and FIG. 3.

FIG. 2 is a block diagram illustrating a system for managing battery according to an embodiment of the present disclosure and FIG. 3 is a block diagram illustrating a configuration of a single converter shown in FIG. 2.

Referring to FIG. 2, the system for managing battery according to an embodiment of the present disclosure may include a battery management device 100 and a battery pack 200 connected to the battery management device 100.

The battery pack 200 may include a plurality of battery cells 210 constituting one secondary battery.

The battery management device 100 includes a single converter 110, and may perform bidirectional charge/discharge active cell balancing of the plurality of battery cells 210 using the single converter 110.

To this end, the battery management device 100 may control the single converter 110 such that the single converter 110 operates in one of a first operation mode and a second operation mode. Here, the first operation mode may be a mode in which multiple battery cell voltages are input and one battery pack voltage is output. The second operation mode may be a mode in which one battery pack voltage is input and multiple battery cell voltages are output.

Here, the single converter 110 may include, as shown in FIG. 3, two first switches 111 connected to each of the plurality of battery cells 210, one second switch 112 connected to the battery pack 200, and one conversion module 113 that converts and outputs a voltage based on an input voltage.

At this time, the first switches 111 may include a first switch 111-P connected to a positive electrode of the battery cell 210 and a first switch 111-N connected to a negative electrode of the battery cell 210.

In addition, one end of the conversion module 113 may be connected to the first switches 111 connected to each of the plurality of battery cells 210 and the other end thereof may be connected to the second switch 112 connected to the battery pack 210. The conversion module 113 may be composed of an inductor or a transformer.

More specifically, when the single converter 110 operates in the first operation mode, the battery management device 100 may perform an active call balancing discharge operation in which battery cell voltages of at least two of the plurality of battery cells 210 are input to the single converter 110 and the battery pack 200 is charged using one battery pack voltage output from the single converter 110. In addition, when the single converter 110 operates in the second operation mode, the battery management device 100 may perform an active cell balancing charge operation in which the battery pack voltage of the battery pack 200 is input to the single converter 110 and the plurality of battery cells 210 are charged using multiple battery cell voltages output from the single converter 110.

To this end, the battery management device 100 may perform bidirectional charge/discharge active cell balancing by controlling on/off of the first switches 111 and the second switch 112 such that the single converter 110 operates in one of the first operation mode and the second operation mode. That is, the battery management device 100 may perform an active cell balancing discharge operation by first controlling the first switches 111 to be turned on and then controlling the second switch 112 to be turned on such that the single converter 110 operates in the first operation mode. In addition, the battery management device 100 may perform an active cell balancing charge operation by first controlling the second switch 112 to be turned on and then controlling the first switches 111 to be turned on such that the single converter 110 operates in the second operation mode.

Accordingly, the system for managing battery according to an embodiment of the present disclosure can reduce the number of components required for active cell balancing, thereby achieving cost reduction and size reduction of the system for managing battery.

The operation of the battery management device 100 is described in more detail. The battery management device 100 including the single converter 110 may include a measurement unit (not shown), a storage unit (not shown), and a control unit (not shown), which are functionally divided components.

The measurement unit may be configured to measure state information of the battery pack 200. Here, the state information of the battery pack 200 may include the internal state and/or the external state of the battery pack 200. For example, the measurement unit may measure information such as the voltage, current, temperature, state of charge (SoC), depth of discharge (DoD), internal resistance, state of health (SoH), idle state, overvoltage or overcurrent state, balancing state, etc. of the battery pack 200 as the internal state of the battery pack 200. For this purpose, the measurement unit may be equipped with various sensors such as a voltage sensor and a current sensor. As another example, the measurement unit may measure state information such as temperature, humidity, smoke, etc. around the battery pack 200 as the external state of the battery pack 200. For this purpose, the measurement unit may be equipped with sensors such as a temperature sensor, a humidity sensor, and a smoke sensor. In this respect, the measurement unit may also be referred to as a sensor.

The measurement unit may measure the state information of the battery pack 200 one-dimensionally by measuring voltage, current, temperature, etc. through sensors. In addition, the measurement unit may perform two-dimensional processing such as calculation on the information obtained one-dimensionally. For example, the measurement unit may measure the state information of the battery pack 200 by calculating or estimating the state of the battery pack 200, such as the state of charge (SoC), internal resistance, state of health (SoH), and imbalancing based on state information such as voltage, current, and temperature.

In addition, the measurement unit may transmit the measured state information of the battery pack 200 to the control unit.

The storage unit may be configured to store computer-executable instructions or program code, program data, and/or other suitable forms of information for each component of the battery management device 100, i.e., the measurement unit and/or the control unit, to perform their functions. A program stored in the storage unit may include a set of instructions executable by the control unit. In an embodiment of the present disclosure, the storage unit may be a memory (a volatile memory such as a random access memory, a nonvolatile memory, or a suitable combination thereof), one or more magnetic disc storage devices, optical disc storage devices, flash memory devices, other forms of storage media that can be accessed by the battery management device 100 and store desired information, or a suitable combination thereof.

In this case, the storage unit may be implemented in a form integrated into another component included in the battery management device 100, such as a component serving as the control unit. For example, the storage unit may be implemented in the form of an embedded memory mounted in a processor serving as the control unit.

The control unit may receive measured state information from the measurement unit. Then, the control unit may perform a diagnostic operation and/or a control operation for the battery pack 200 using the state information received from the measurement unit.

The control unit may transmit information according to the diagnostic operation and/or the control operation for the battery pack 200 to another component or store the information. Here, the other component may be a component included inside the battery management device 100 according to an embodiment of the present disclosure or a component included in another device existing outside the battery management device 100. In particular, when the target battery pack 200 is mounted on a vehicle, the battery management device 100 may transmit information according to the diagnostic operation and/or the control operation for the battery pack 200 to a vehicle-side upper control system, such as a vehicle control unit (VCU), an electronic control unit (ECU), etc.

Further, the control unit may transmit the information according to the diagnostic operation and/or the control operation for the battery pack 200 using various wired and wireless communication configurations or methods. For example, the control unit may transmit the information according to the diagnostic operation and/or control operation for the battery pack 200 to a vehicle-side control system using controller area network (CAN) communication.

In addition, the control unit may be configured to control the charging operation or the discharging operation of the battery pack 200 as one of control operations for the battery pack 200. At this time, the control unit may directly perform charging control or discharging control for the battery pack 200. The control unit may also indirectly instruct or control other components provided inside or outside the battery management device 100 to perform charging control or discharging control.

In addition, the control unit may perform a processing operation for each state of the battery pack 200. In this case, the control unit may be configured to perform different processing operations for respective states. In addition, the control unit may perform at least partially identical processing operations for different states. Further, the processing operations performed by the control unit do not necessarily include only active operations, and may also include passive operations. In particular, the processing operations performed by the control unit may include operations that do not perform any control or communication.

In addition, when the control unit directly performs a processing operation for the battery pack 200, the control unit may transmit results of performed processing to other components.

In addition, the control unit may perform related operations or functions by selectively including a processor, a controller, an application-specific integrated circuit (ASIC), other chipsets, a logic circuit, a register, a communication modem, a data processing device, etc. known in the art at least partially. In addition, these operations may be implemented as software, and in this case, the program may be stored in the storage unit. In this respect, the term "control unit" may be replaced with terms such as a processor, a controller, and a chipset. In addition, at least some of the functions of the measurement unit may also be implemented as these components.

In addition, the control unit does not necessarily have to be physically integrated or located at the same location. For example, some of the functions of the control unit may be performed on the side of the battery pack 200, and other functions of the control unit may be performed on the vehicle side.

More specifically, at least a part of the control unit may be implemented by a battery management system (BMS). In this case, at least a part of the control unit may be implemented in a form included in the battery pack 200. Alternatively, at least a part of the control unit may be located outside the battery management device 100. For example, at least some functions of the control unit may be implemented by a control device mounted on the vehicle, such as a VCU or an ECU. In addition, the measurement unit may also be implemented as an integrated or separate part or component.

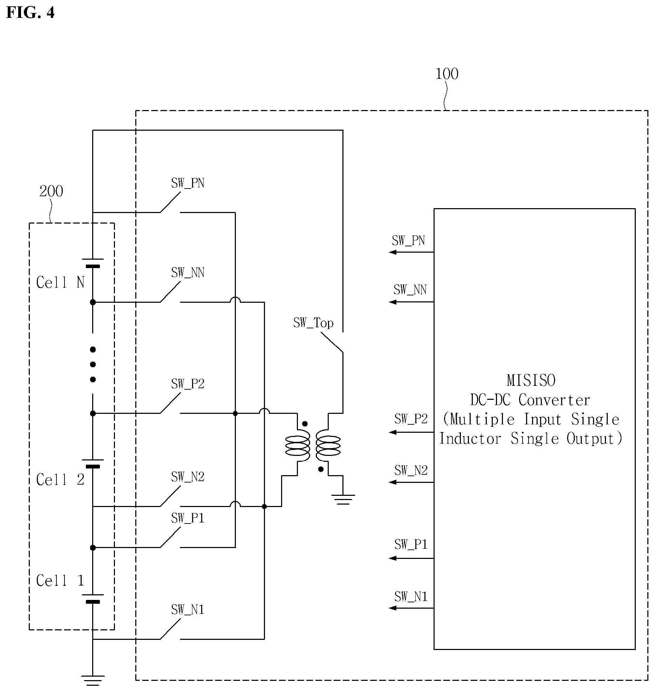

An example of a system for managing battery according to an embodiment of the present disclosure will be described with reference to FIG. 4 to FIG. 6.

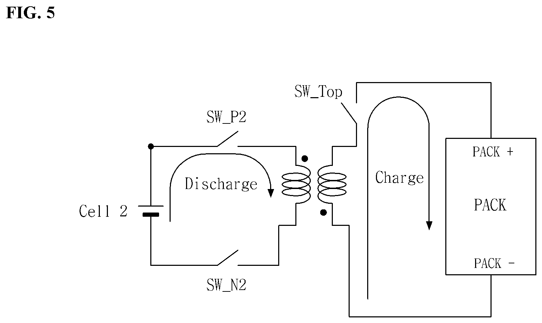

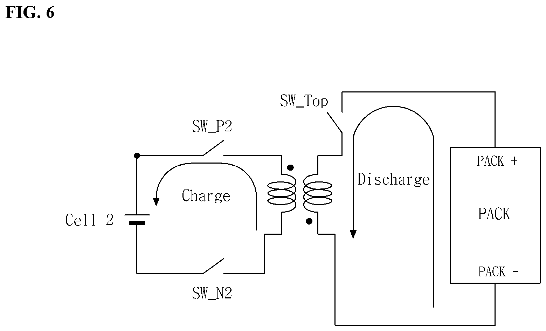

FIG. 4 is a diagram illustrating an example of a system for managing battery according to an embodiment of the present disclosure, FIG. 5 is a diagram illustrating an active cell balancing discharge operation of the system for managing battery shown in FIG. 4, and FIG. 6 is a diagram illustrating an active cell balancing charge operation of the system for managing battery shown in FIG. 4.

Referring to FIG. 4, a DC-DC converter, which is the single converter 110 of the battery management device 100, may perform bidirectional charge/discharge active cell balancing. More specifically, in the active cell balancing discharge operation, the DC-DC converter receives battery cell voltages of Cell 1 to Cell N as inputs (multiple voltage inputs) and outputs Pack+ voltage (single voltage output), thereby charging the discharged battery cells with the battery pack voltage. That is, in the discharge operation, the DC-DC converter has multiple inputs and single output, and the active cell balancing discharge operation is an operation of discharging the battery cells and charging the battery pack with discharged energy. On the other hand, in the active cell balancing charge operation, the DC-DC converter performs an operation of redistributing the energy of the battery pack to the battery cells by receiving the battery pack voltage as input (single voltage input) and outputting the battery cell voltages (multiple voltage outputs). That is, in the charge operation, the DC-DC converter has single input and multiple outputs, and the active cell balancing charge operation is a battery pack → battery cell charge operation of evenly redistributing the energy of the battery pack to the battery cells.

For example, in the active cell balancing discharge operation (battery cells → battery pack), SW_P and SW_N switches, which are the first switches 111, are turned on first, and then SW_Top switch, which is the second switch 112, is turned on, as shown in FIG. 5. Discharge current flows in the battery cells, and charge current flows in the battery pack. Therefore, energy discharged from the battery cells is charged to the battery pack.

In the active cell balancing charge operation (battery cells ← battery pack), SW_Top switch, which is the second switch 112, is turned on first, and then SW_P and SW_N switches, which are the first switches 111, are turned on, as shown in FIG. 6. Discharge current flows in the battery pack, and charge current flows in the battery cells. Therefore, energy discharged from the battery pack is charged to the battery cells.

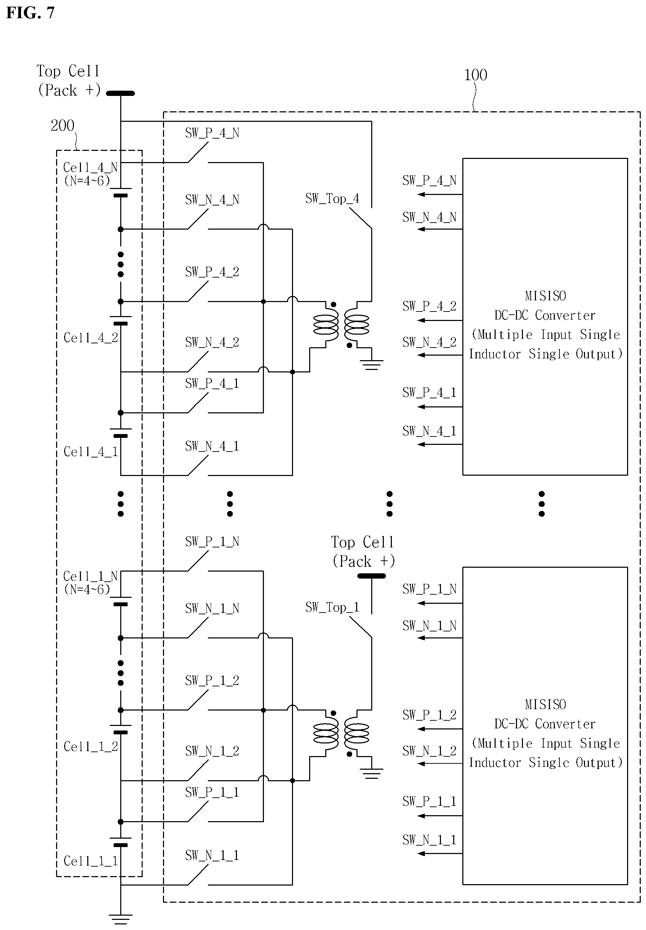

Another example of a system for managing battery according to an embodiment of the present disclosure will be described with reference to FIG. 7.

FIG. 7 is a diagram illustrating another example of a system for managing battery according to an embodiment of the present disclosure.

The battery management device 100 includes N converters 110 (N being a smaller than M, which is the number of battery cells 210), and may perform bidirectional charge/discharge active cell balancing of a plurality of battery cells 210 using the N converters 110.

The N converters 110 may perform bidirectional charge/discharge active cell balancing for different battery cells 210 among the plurality of battery cells 210.

That is, although active cell balancing for all of battery cells 210 can be performed with only one converter 110 in an embodiment of the present disclosure, active cell balancing for all of the battery cells 210 may be performed using a smaller number of converters 110 than the number of battery cells 210 in order to simplify the sequence of the active cell balancing operation and improve the cell balancing speed. At this time, the converters 110 are used to perform cell balancing for different battery cells 210.

For example, the system for managing battery according to the embodiment of the present disclosure may use not only one MISISO (Multiple Input Single Inductor Single Output) converter or MISTSO (Multiple Input Single Transformer Single Output) converter, which is a single converter 110, but also a plurality of MISISO converters or MISTSO converters, as illustrated in FIG. 7. When a plurality of converters is used, the cell balancing sequence becomes less complex than handling all battery cells with one MISISO converter or MISTSO converter, and the cell balancing speed can also increase.

The operations according to the embodiments of the present disclosure described above can be implemented in the form of program instructions that can be performed through various computer means and recorded on a computer-readable storage medium. The computer-readable storage medium refers to any medium that participates in providing instructions to a processor for execution. The computer-readable storage medium may include program instructions, data files, data structures, or a combination thereof. For example, the computer-readable storage medium may include a magnetic medium, an optical storage medium, a memory, etc. The computer program may be distributed on computer systems connected through a network, and computer-readable code may be stored and executed in a distributed manner. Functional programs, code, and code segments for implementing the embodiments of the present disclosure may be easily inferred by programmers in the technical field to which the embodiments of the present disclosure belong.

The embodiments of the present disclosure are intended to explain the technical idea, and the scope of the technical idea of the embodiments of the present disclosure is not limited by these embodiments. The protection scope of the embodiments of the present disclosure should be interpreted by the following claims, and all technical ideas within the equivalent scope should be interpreted as being included in the scope of the rights of the embodiments of the present disclosure.

### <Detailed Description of Main Elements>

100: Battery management device
110: Single converter
111: First switch
112: Second switch
113: Conversion module
200: Battery pack
210: Battery cell

## Claims

1. A system for managing battery comprising:
a battery pack including a plurality of battery cells; and
a battery management device including a single converter and configured to perform bidirectional charge/discharge active cell balancing of the plurality of battery cells using the single converter.

2. The system of claim 1, wherein the battery management device controls the single converter such that the single converter operates in one of a first operation mode in which a plurality of battery cell voltages is input and one battery pack voltage is output, and a second operation mode in which the one battery pack voltage is input and the plurality of battery cell voltages is output.

3. The system of claim 2, wherein the battery management device performs an active cell balancing discharge operation in which voltages of at least two of the plurality of battery cells are input to the single converter and the battery pack is charged using one battery pack voltage output from the single converter when the single converter operates in the first operation mode.

4. The system of claim 2, wherein the battery management device performs an active cell balancing charge operation in which the battery pack voltage of the battery pack is input to the single converter and the plurality of battery cells is charged using the battery cell voltages of the plurality of battery cells output from the single converter when the single converter operates in the second operation mode.

5. The system of claim 2, wherein the single converter comprises two first switches connected to each of the plurality of battery cells.

6. The system of claim 5, wherein the single converter further comprises a second switch connected to the battery pack.

7. The system of claim 6, wherein the single converter further comprises an inductor having one end connected to the first switches connected to each of the plurality of battery cells and the other end connected to the second switch connected to the battery pack.

8. The system of claim 6, wherein the single converter further comprises a transformer having one end connected to the first switches connected to each of the plurality of battery cells and the other end connected to the second switch connected to the battery pack.

9. The system of claim 6, wherein the battery management device controls on/off of the first switches and the second switch such that the single converter operates in one of the first operation mode and the second operation mode to perform bidirectional charge/discharge active cell balancing.

10. The system of claim 9, wherein the battery management device controls the first switches to be turned on first and then controls the second switch to be turned on such that the single converter operates in the first operation mode to perform an active cell balancing discharge operation.

11. The system of claim 9, wherein the battery management device controls the second switch to be turned on first and then controls the first switches to be turned on such that the single converter operates in the second operation mode to perform an active cell balancing charge operation.

12. The system of claim 1, wherein the battery management device includes N converters and performs bidirectional charge/discharge active cell balancing of the plurality of battery cells using the N converters, N being smaller than the number of battery cells, M.

13. The system of claim 12, wherein the N converters perform bidirectional charge/discharge active cell balancing for different battery cells among the plurality of battery cells.
